# FASCICULE DE BREVET EUROPEEN

(11) **EP 3 541 657 B1**
(45) Date de publication et mention de la délivrance du brevet: **09.12.2020**
(21) Numéro de dépôt: 17804251.1
(22) Date de dépôt: 14.11.2017
(51) Int. Cl.: B60P 7/12, B60P 7/135

(54) **DISPOSITIF DE CALAGE**
BEFESTIGUNGSVORRICHTUNG
SECURING DEVICE

(30) Priorité: 15.11.2016 FR 1661052
(43) Date de publication de la demande: 25.09.2019
(73) Titulaire: Commissariat à l'énergie atomique et aux énergies alternatives, 75015 Paris (FR); DCNS, 75015 Paris (FR)
(72) Inventeur: CARMINATI, Jean-Noël, 73100 Aix-les-Bains (FR); MARTIN, Pascal, 38100 Grenoble (FR)
(74) Mandataire: Cabinet Beaumont
(86) Numéro de dépôt international: PCT/FR2017/053113
(87) Numéro de publication internationale: WO 2018/091817

(56) Documents cités:
- CH-A- 551 333
- GB-A- 193 230
- US-A- 4 121 849

## Description

### Domaine

La présente demande concerne un dispositif et une méthode de calage d'un groupe de charges.

### Exposé de l'art antérieur

Pour certaines applications, il est souhaitable de caler des charges, par exemple des caisses, des containers ou des batteries d'accumulateurs, en particulier lorsque les charges sont disposées dans un véhicule, par exemple un navire, un avion, un train, un camion, etc. Dans ce but, des dispositifs de calage sont intercalés entre les charges pour empêcher les déplacements des charges.

De façon générale, il est souhaitable que l'encombrement du dispositif de calage soit faible et que le montage et le démontage du dispositif de calage soit simple. En outre, le dispositif de calage doit pouvoir être démonté même après une longue durée d'utilisation. Il faut donc que le fonctionnement du dispositif de calage soit fiable et que le risque de blocage du dispositif de calage, par exemple suite à la corrosion de pièces mécaniques, soit faible. De plus, pour certaines applications, les dispositifs de calage peuvent devoir satisfaire des contraintes supplémentaires.

Selon un exemple, lorsque les charges sont fragiles, la mise en place du dispositif de calage peut ne pas pouvoir être réalisée par chocs. Ceci empêche, par exemple, l'utilisation de cales introduites à la masse. Selon un autre exemple, l'encombrement de l'enceinte dans laquelle sont disposées les charges peut empêcher l'utilisation d'outils pour la mise en place des dispositifs de calage dont la manipulation requiert de l'espace, comme par exemple une masse. Selon un autre exemple, lorsque les charges sont réparties en couches empilées les unes sur les autres, les dispositifs de calage intercalés entres les charges d'une couche ne doivent pas dépasser en hauteur par rapport à cette couche pour ne pas gêner la mise en place de la couche suivante. Selon un autre exemple, la visibilité des dispositifs de calage peut être réduite ou inexistante. Lorsque l'actionnement du dispositif de calage est obtenu par la coopération d'un outil, par exemple une visseuse, et d'un mécanisme d'accès du dispositif de calage, par exemple une tête de vis, le mécanisme d'accès doit rester immobile quelle que soit la configuration dans laquelle se trouve le dispositif de calage de façon qu'un opérateur puisse toujours trouver facilement le mécanisme d'accès même sans le voir

CH 551 333 A montre un dispositif et une méthode de calage selon l'état de la technique.

### Résumé

Un objet d'un mode de réalisation est de pallier tout ou partie des inconvénients des dispositifs de calage décrits précédemment.

Un autre objet d'un mode de réalisation est que le dispositif de calage ne comprend que des pièces mécaniques.

Un autre objet d'un mode de réalisation est que la hauteur du dispositif de calage ne varie pas quelle que soit la configuration dans laquelle se trouve le dispositif de calage.

Un autre objet d'un mode de réalisation est que la position du mécanisme d'accès du dispositif de calage reste constante quelle que soit la configuration dans laquelle se trouve le dispositif de calage.

Un autre objet d'un mode de réalisation est que dispositif de calage est réutilisable.

Ainsi, un mode de réalisation prévoit un dispositif de calage comprenant une tige comprenant une première portion filetée ayant un premier filetage à droite et une deuxième portion filetée ayant un deuxième filetage à gauche, une première noix engrenant avec le premier filetage, une deuxième noix engrenant avec le deuxième filetage, et au moins des premier et deuxième mors reliés chacun aux première et deuxième noix selon des liaisons glissière.

Selon un mode de réalisation, le rapport entre la hauteur de chaque premier et deuxième mors, mesurée selon l'axe de la tige, et la dimension transversale maximale, lorsque les mors sont les plus rapprochés l'un de l'autre, est compris entre 2 et 10.

Selon un mode de réalisation, la tige comprend, à une extrémité, une tête destinée à être actionnée par un outil.

Selon un mode de réalisation, la première noix comprend des premier et deuxième flancs opposés inclinés par rapport à l'axe de la tige, les angles d'inclinaison des premier et deuxième flancs étant opposés, la deuxième noix comprenant des troisième et quatrième flancs opposés inclinés par rapport à l'axe de la tige, les angles d'inclinaison des troisième et quatrième flancs étant opposés, le premier mors comprenant des première et deuxième parois, le premier flanc étant adapté à coulisser sur la première paroi et le troisième flanc étant adapté à coulisser sur la deuxième paroi, et le deuxième mors comprenant des troisième et quatrième parois, le deuxième flanc étant adapté à coulisser sur la troisième paroi et le quatrième flanc étant adapté à coulisser sur la quatrième paroi.

Selon un mode de réalisation, le dispositif comprend :
un premier pion relié à la première noix, au moins une extrémité du premier pion coulissant dans une première rainure du premier mors s'étendant parallèlement à la première paroi ;
un deuxième pion relié à la première noix, au moins une extrémité du deuxième pion coulissant dans une deuxième rainure du deuxième mors et s'étendant parallèlement à la troisième paroi ;
un troisième pion relié à la deuxième noix, au moins une extrémité du troisième pion coulissant dans une troisième rainure du premier mors et s'étendant parallèlement à la deuxième paroi ; et
un quatrième pion relié à la deuxième noix, au moins une extrémité du quatrième pion coulissant dans une quatrième rainure du deuxième mors et s'étendant parallèlement à la quatrième paroi.

Selon un mode de réalisation, le dispositif comprend au moins un axe, d'axe perpendiculaire à l'axe de la tige, fixé au premier mors ou au deuxième mors, la tige comprenant une gorge entre la première portion filetée et la deuxième portion filetée, l'axe étant tangent à la tige dans la gorge.

Selon un mode de réalisation, le dispositif comprend au moins une butée entre les première et deuxième noix.

Selon un mode de réalisation, le dispositif comprend un élément élastique entourant les premier et deuxième mors.

Selon un mode de réalisation, les première et deuxième noix sont identiques.

Selon un mode de réalisation, le pas du premier filetage à droite est différent du pas du deuxième filetage à gauche.

Un autre mode de réalisation prévoit également un procédé de calage de charges comprenant les étapes suivantes :
disposer des dispositifs de calage tels que définis précédemment entre des charges d'une première couche de charges ;
actionner les dispositifs de calage pour caler les charges ; et
former une deuxième couche de charges sur la première couche.

### Brève description des dessins

Ces caractéristiques et avantages, ainsi que d'autres, seront exposés en détail dans la description suivante de modes de réalisation particuliers faite à titre non limitatif en relation avec les figures jointes parmi lesquelles :
la figure 1 est une vue de côté, partielle et schématique, d'un ensemble de charges maintenues par des dispositifs de calage ;
la figure 2 est une vue de dessus avec coupe, partielle et schématique, de la figure 1 ;
la figure 3 est une vue en perspective d'un mode de réalisation d'un dispositif de calage ;
la figure 4 est une vue éclatée du dispositif de calage représenté en figure 3 ;
les figures 5, 6 et 7 sont des vues en coupe du dispositif de calage représenté en figure 3 respectivement selon les lignes V-V, VI-VI et VII-VII ;
les figures 8 et 9 sont des vues de dessus du dispositif de calage représenté en figure 3 à deux configurations d'utilisation différentes ;
les figures 10 à 12 sont des vues en perspective d'autres modes de réalisation du dispositif de calage ;
la figure 13 est une vue en perspective du dispositif de calage représenté en figure 12, certaines pièces du dispositif de calage n'étant pas représentées ;
la figure 14 est une vue en coupe d'un autre mode de réalisation du dispositif de calage ;
les figures 15 à 17 sont des vues en coupe, partielles et schématiques, d'autres modes de réalisation du dispositif de calage ;
la figure 18 est une vue en coupe schématique d'un mode de réalisation d'un dispositif anti-rotation ; et
les figures 19A à 19C sont des vues en perspective, partielles et schématiques, du dispositif de calage représenté en figure 3 à des étapes successives d'un procédé de blocage du dispositif de calage contre le desserrage.

### Description détaillée

De mêmes éléments ont été désignés par de mêmes références aux différentes figures. Par souci de clarté, seuls les éléments qui sont utiles à la compréhension des modes de réalisation décrits ont été représentés et sont détaillés. Dans la description qui suit, lorsque l'on fait référence à des qualificatifs de position absolue, tels que les termes "avant", "arrière", "haut", "bas", "gauche", "droite", etc., ou relative, tels que les termes "dessus", "dessous", "supérieur", "inférieur", etc., ou à des qualificatifs d'orientation, tels que les termes "horizontal", "vertical", etc., il est fait référence à l'orientation des figures ou à un dispositif de calage dans une position normale d'utilisation. Sauf précision contraire, les expressions "approximativement", "sensiblement", et "de l'ordre de" signifient à 10 % près, de préférence à 5 % près.

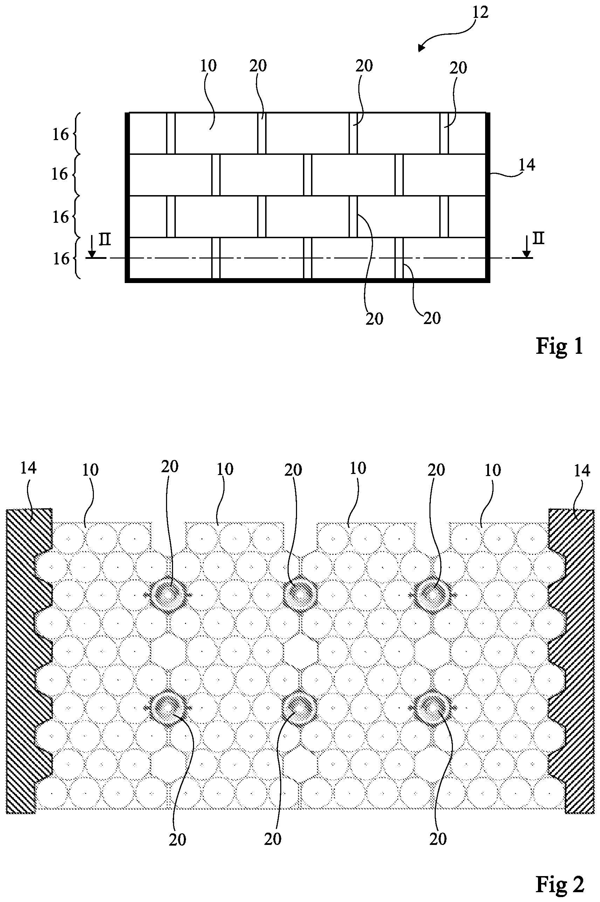

La figure 1 est une vue de côté, partielle et schématique, d'un ensemble de charges 10 disposées dans une enceinte 12 délimitée par un bâti 14 et réparties en couches 16 sensiblement horizontales empilées les unes sur les autres, chaque couche 16 comprenant des charges 10 disposées les unes à côté des autres. A titre d'exemple, cinq couches 16 sont représentées en figure 1. Les charges 10 correspondent, par exemple, à des boîtes, des containers ou à des batteries d'accumulateurs. Des dispositifs de calage 20 sont intercalés, pour chaque couche 16, entre des charges 10 de la couche 16 pour empêcher les déplacements des charges 10.

La figure 2 est une vue de dessus avec coupe de la figure 1 selon la ligne II-II. A titre d'exemple, en figure 2, on a représenté deux dispositifs de calage 20 intercalés entre deux charges 10 adjacentes. Chaque dispositif de calage 20, lorsqu'il est actionné tend à écarter les deux charges 10 l'une de l'autre.

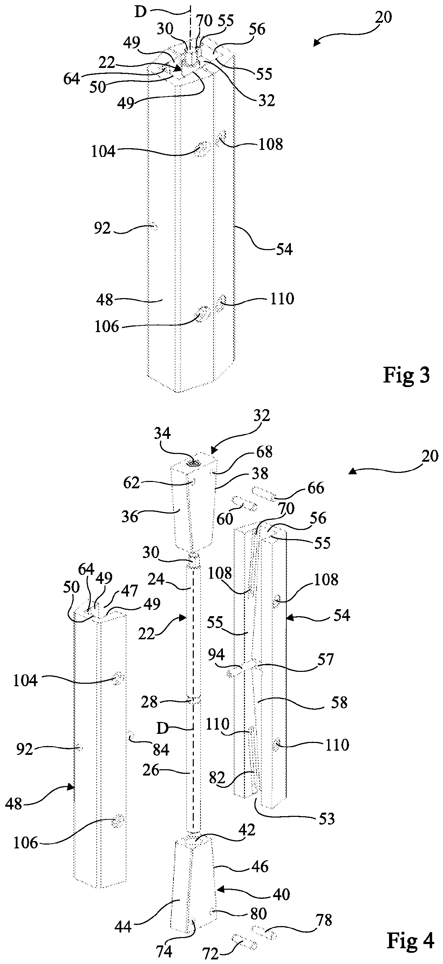

Les figures 3 à 7 représentent un mode de réalisation plus détaillé du dispositif de calage 20 comprenant :
une tige 22 d'axe D comprenant une première portion filetée 24 ayant un filetage à gauche et une deuxième portion filetée 26 ayant un filetage à droite, les portions filetées 24, 26 étant séparées par une gorge 28 située sensiblement en portion médiane de la tige 22, la tige 22 comprenant, en outre, une tête d'actionnement 30 ;

une première noix 32 comprenant une ouverture filetée 34 coopérant avec la portion filetée 24, la première noix 32 comprenant en outre des flancs 36, 38 opposés inclinés par rapport à l'axe D, les angles d'inclinaison des flancs 36, 38 étant opposés, les flancs 36, 38 se rapprochant l'un de l'autre lorsque l'on s'éloigne de la tête 30 selon l'axe D ;

une deuxième noix 40 comprenant une ouverture filetée 42 coopérant avec la portion filetée 26, la deuxième noix 40 comprenant en outre des flancs opposés 44, 46 inclinés par rapport à l'axe D, les angles d'inclinaison des flancs 44, 46 étant opposés, les flancs 44, 46 se rapprochant l'un de l'autre lorsque l'on se rapproche de la tête 30 selon l'axe D ;

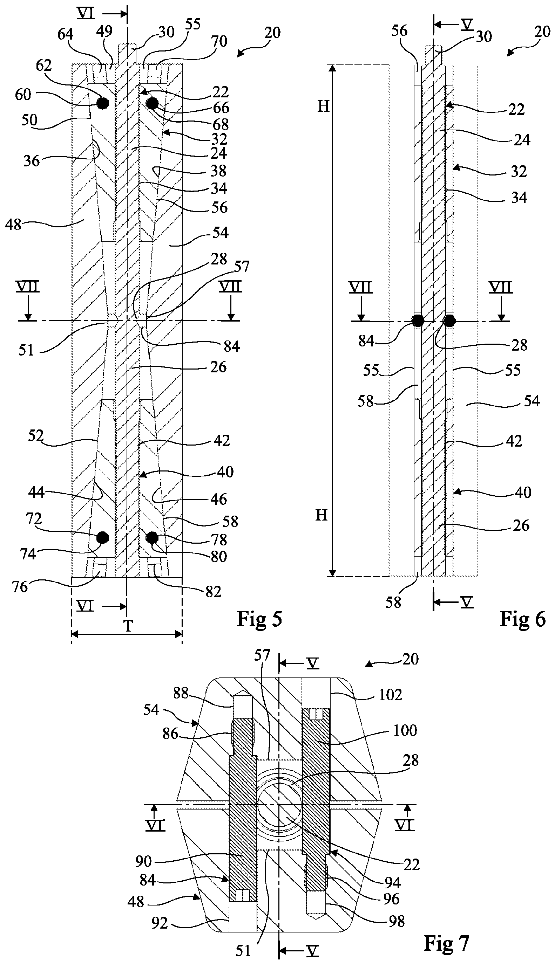

un premier mors 48 qui s'étend sensiblement sur toute la hauteur de la tige 22, éventuellement à l'exception de la tête d'actionnement 30, le mors 48 comprenant, du côté de la tige 22, une cavité 47 s'étendant sur toute la hauteur du mors 48, la cavité 47 étant délimitée par deux parois latérales parallèles 49 et par des parois de fond 50, 51, 52 successives et perpendiculaires aux parois latérales 49, la paroi de fond 50 étant par exemple une paroi plane inclinée par rapport à l'axe D, sur laquelle coulisse le flanc incliné 36 de la noix 32, la paroi de fond 51, visible en figure 5, s'étendant entre les parois de fond 50 et 52 et étant parallèle à l'axe D, et la paroi de fond 52, visible en figure 5, étant par exemple une paroi plane inclinée par rapport à l'axe D, sur laquelle coulisse le flanc incliné 44 de la noix 40, les inclinaisons des parois de fond 50, 52 étant égales en valeur absolue et de signes opposés ;

un deuxième mors 54 qui s'étend sensiblement sur toute la hauteur de la tige 22, éventuellement à l'exception de la tête d'actionnement 30, le mors 54 comprenant, du côté de la tige 22, une cavité 53 s'étendant sur toute la hauteur du mors 54, la cavité 53 étant délimitée par deux parois latérales parallèles 55 et par des parois de fond 56, 57, 58 successives et perpendiculaires aux parois latérales 55, la paroi de fond 56 étant par exemple une paroi plane inclinée par rapport à l'axe D, sur laquelle coulisse le flanc incliné 38 de la noix 32, la paroi de fond 57 s'étendant entre les parois de fond 56 et 58 et étant parallèle à l'axe D, et la paroi de fond 58 étant par exemple une paroi plane inclinée par rapport à l'axe D, sur laquelle coulisse le flanc incliné 46 de la noix 40, les inclinaisons des parois de fond 56, 58 étant égales en valeur absolue et de signes opposés ;

un premier pion de guidage 60, par exemple de forme cylindrique d'axe perpendiculaire à l'axe D, logé dans une ouverture 62 traversant la noix 32, le pion 60 s'étendant de part et d'autre de la noix 32, les extrémités du pion 60 coulissant dans des rainures 64, visibles sur les figures 4 et 5, prévues dans le mors 48 et s'étendant parallèlement à la paroi de fond 50 ;

un deuxième pion de guidage 66, par exemple de forme cylindrique d'axe perpendiculaire à l'axe D, logé dans une ouverture 68 traversant la noix 32, le pion 66 s'étendant de part et d'autre de la noix 32, les extrémités du pion 66 coulissant dans des rainures 70 prévues dans le mors 54 et s'étendant parallèlement à la paroi de fond 56 ;

un troisième pion de guidage 72, par exemple de forme cylindrique d'axe perpendiculaire à l'axe D, logé dans une ouverture 74 traversant la noix 40, le pion 72 s'étendant de part et d'autre de la noix 40, les extrémités du pion 72 coulissant dans des rainures 76, visibles en figure 5, prévues dans le mors 48 et s'étendant parallèlement à la paroi de fond 52 ;

un quatrième pion de guidage 78, par exemple de forme cylindrique d'axe perpendiculaire à l'axe D, logé dans une ouverture 80 traversant la noix 40, le pion 78 s'étendant de part et d'autre de la noix 40, les extrémités du pion 78 coulissant dans des rainures 82 prévues dans le mors 54 et s'étendant parallèlement à la paroi de fond 58 ;

un premier axe de centrage 84 d'axe perpendiculaire à l'axe D, comprenant une partie filetée 86, visible en figure 7, coopérant avec une ouverture filetée 88 non traversante du mors 54, la partie filetée 86 se prolongeant par une première partie cylindrique 90 logée dans une ouverture 92 cylindrique traversante du mors 48, l'axe 84 étant tangent à la tige 22 dans la gorge 28 ; et

un deuxième axe de centrage 94 d'axe perpendiculaire à l'axe D, comprenant une partie filetée 96, visible en figure 7, coopérant avec une ouverture filetée 98 non traversante du mors 48, la partie filetée 96 se prolongeant par une partie cylindrique 100 logée dans une ouverture 102 cylindrique traversante du mors 54, l'axe 94 étant tangent à la tige 22 dans la gorge 28.

Dans le mode de réalisation représenté sur les figures 3 à 7, les hauteurs des noix 32, 40 mesurées selon l'axe D sont égales. En outre, les angles d'inclinaison des flancs 36, 38, 44, 46 par rapport à l'axe D sont égaux en valeur absolue et égaux en valeur absolue aux angles d'inclinaison des parois 50, 52, 56, 58. Comme cela sera décrit par la suite, à des fins de montage, le mors 48 comprend des ouvertures traversantes alignées 104, perpendiculaires à l'axe D, à une extrémité des rainures 64 et des ouvertures traversantes alignées 106, perpendiculaires à l'axe D, à une extrémité des rainures 76. En outre, le mors 54 comprend des ouvertures traversantes alignées 108, perpendiculaires à l'axe D, à une extrémité des rainures 70 et des ouvertures traversantes alignées 110, perpendiculaires à l'axe D, à une extrémité des rainures 82.

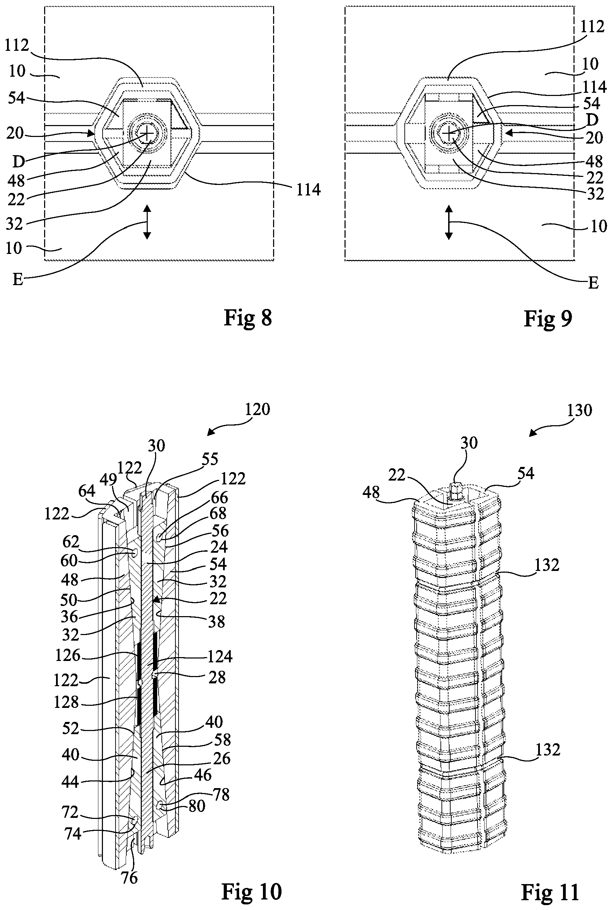

Le fonctionnement du dispositif de calage 20 va maintenant être décrit en relation avec les figures 8 et 9. Sur ces figures, une couche 112 d'un matériau élastique, par exemple un élastomère, entoure les deux mors 48 et 54. A titre de variante, la couche 112 peut être remplacée par des plaques d'un matériau élastique fixées sur les faces externes des mors 48, 54.

La tige 22 peut être mise en rotation autour de son axe D par un outil, non représenté, coopérant avec la tête 30, par exemple une clé mécanique ou une visseuse équipée d'une douille de forme complémentaire de la tête 30. La rotation de la tige 22 entraîne le déplacement de chaque noix 32, 40 selon l'axe D dans des sens opposés par coopération de la portion filetée 24 avec l'ouverture filetée 34 de la noix 32 et par coopération de la portion filetée 26 avec l'ouverture filetée 42 de la noix 40. La mise en rotation de la tige 22 dans un sens entraîne l'éloignement des noix 32, 40 l'une de l'autre et la mise en rotation de la tige 22 dans le sens opposé entraîne le rapprochement des noix 32, 40 l'une de l'autre. Le rapprochement des noix 32, 40 l'une de l'autre entraîne l'éloignement des mors 48, 54 l'un de l'autre selon la direction E, par exemple perpendiculaire à l'axe D, par coopération des flancs 36, 38 de la noix 32 avec les parois de fond 50, 56 des mors 48, 54 et par coopération des flancs 44, 46 de la noix 40 avec les parois de fond 52, 58 des mors 48, 54. L'éloignement des noix 32, 40 l'une de l'autre entraîne le rapprochement des mors 48, 54 l'un de l'autre selon la direction E par coopération des pions de guidage 60, 66 de la noix 32 avec les rainures 64, 70 des mors 48, 54 et par coopération des pions de guidage 72, 78 de la noix 40 avec les rainures 76, 82 des mors 48, 54. Les axes 84, 94 empêchent un déplacement relatif selon l'axe D du mors 48 par rapport au mors 54 et maintiennent une liaison pivot entre la tige 22 et les mors 48, 54.

Les pas des portions filetées 24, 26 de la tige 22 et les angles d'inclinaison des parois 50, 52, 56, 58 sont choisis pour que le dispositif de calage 20 ne soit pas un système mécanique réversible, c'est-à-dire qu'une action sur les mors 48, 54 ne puisse pas entraîner le déplacement des noix 32, 40 et la mise en rotation de la tige 22. De ce fait, en l'absence d'actionnement de la tête 30 de la tige 22, le dispositif de calage 20 reste bloqué.

Le dispositif de calage 20 est initialement dans une configuration dite fermée dans laquelle les mors 48, 54 sont les plus rapprochés l'un de l'autre, de préférence au contact l'un de l'autre, comme cela est représenté sur les figures 3 et 8. Selon un mode de réalisation, dans la configuration fermée, le rapport entre la hauteur H des mors 48, 54, mesurée selon l'axe D, et la dimension transversale maximale T du dispositif de calage 20 dans la configuration fermée, est compris entre 2 et 10, de préférence entre 5 et 10. Le dispositif de calage 20 est alors introduit dans un logement 114 délimité par deux charges 10 adjacentes et ayant une forme sensiblement complémentaire des mors 48, 54. A titre d'exemple, comme cela apparaît en figure 8, le logement 114, a, dans un plan perpendiculaire à l'axe D, une section de forme générale hexagonale, et chaque mors 48, 54 a une paroi extérieure, opposée à la tige 22, qui, dans un plan perpendiculaire à l'axe D, a la forme d'un demi-hexagone. La tige 22 est alors entraînée en rotation par la coopération d'un outil avec la tête 30 pour entraîner l'écartement des mors 48, 54 l'un de l'autre jusqu'à ce que la couche élastique 112 vienne au contact des charges 10. L'actionnement de la tige 22 est alors interrompu. Le dispositif de calage 20 étant un système mécanique non réversible, il reste bloqué dans cette configuration. La fonction de calage est ainsi obtenue. Le retrait du dispositif de calage 20 est réalisé en mettant en rotation la tige 22 par la coopération d'un outil avec la tête 30 pour entraîner le rapprochement des mors 48, 54 l'un de l'autre. La couche 112 n'est alors plus en contact avec les charges 10 et le dispositif de calage 20 peut être retiré. Le dispositif de calage 20 peut être réutilisé autant de fois que nécessaire.

L'intensité des efforts exercés par les mors 48, 54 sur les charges 10 peut être ajustée de façon précise par un actionnement de la tige 22. L'application des efforts de calage peut être progressive, ce qui permet de ne pas endommager les charges 10. La répartition des efforts exercés par les mors 48, 54 sur les charges 10 dépend notamment des dimensions des noix 32, 40. Pendant l'actionnement du dispositif de calage 20, la hauteur totale du dispositif de calage 20 est constante et égale à la hauteur H des mors 48, 54. Ceci permet d'utiliser de façon simple le dispositif 20 pour caler des charges 10 réparties en couches empilées étant donné que lorsque le dispositif de calage 20 ne dépasse pas en hauteur par rapport aux charges 10 entre lesquelles il est disposé en configuration fermée, il ne dépasse pas en hauteur par rapport aux charges 10 quel que soit l'écartement entre les mors 48, 54. Pendant l'actionnement du dispositif de calage 20, il n'y a pas de déplacement de la tige 22 selon l'axe D. La position de la tête 30 selon l'axe D est donc immobile. Cela permet d'atteindre facilement la tête 30 et d'actionner le dispositif de calage 20 même s'il n'est pas visible.

Un mode de réalisation du montage du dispositif de calage 20 est le suivant :
les noix 32, 40 sont vissées sur la tige 22 de façon à être les plus proches l'une de l'autre selon l'axe D ;
les mors 48, 54 sont alors placés l'un contre l'autre, les ouvertures 104, 106, 108 et 110 des mors 48, 54 étant alors respectivement dans le prolongement des ouvertures 62, 74, 68, 80 des noix 32, 40 ;
le pion de guidage 60 est introduit dans les ouvertures 104 et 62, le pion de guidage 66 est introduit dans les ouvertures 108 et 68, le pion de guidage 72 est introduit dans les ouvertures 106 et 74 et le pion de guidage 78 est introduit dans les ouvertures 110 et 80 ;
la tige 22 est actionnée pour éloigner les mors 48, 54 l'un de l'autre selon l'axe D, les ouvertures 104, 106, 108 et 110 des mors 48, 54 n'étant plus alignées respectivement avec les ouvertures 62, 74, 68, 80 des noix 32, 40, les pions de guidage 60, 66, 72 et 78 ne peuvent pas s'échapper du dispositif de calage 20 ; et
l'axe 84 est introduit dans l'ouverture 92 du mors 48 et vissé au mors 54 et l'axe 94 est introduit dans l'ouverture 102 du mors 54 et vissé au mors 48.

Un mode de réalisation du démontage du dispositif de calage 20 est le suivant :
les axes 84 et 94 sont dévissés et retirés ;
la tige 22 est actionnée pour rapprocher les mors 48, 54 l'un de l'autre au maximum selon l'axe D ; et
les ouvertures 104, 106, 108 et 110 des mors 48, 54 étant alors respectivement dans le prolongement des ouvertures 62, 74, 68, 80 des noix 32, 40, les pions de guidage 60, 66, 72, 78 peuvent alors être retirés.

Selon un mode de réalisation, les mors 48 et 54 sont des pièces identiques et les noix 32, 40 sont des pièces identiques à l'exception des filetages qui sont opposés, l'une des noix ayant un filetage à droite et l'autre noix ayant un filetage à gauche. Ceci permet de réduire le coût de fabrication du dispositif de calage 20.

La figure 10 est une vue en perspective avec coupe d'un autre mode de réalisation d'un dispositif de calage 120. Le dispositif de calage 120 comprend l'ensemble des éléments du dispositif de calage 20 à la différence que la couche 112 est remplacée par des plaques 122 d'un matériau élastique fixées sur les faces externes de chaque mors 48, 54, et que la tige 22 comprend une portion non filetée 124 entre les portions filetées 24 et 26, la gorge 28 étant située sensiblement au milieu de la portion non filetée 124. Le dispositif de calage 120 comprend, en outre, une butée 126, ayant par exemple une forme annulaire, disposée entre la noix 32 et les axes 84, 94, non visibles en figure 10, et comprend une butée 128, ayant par exemple une forme annulaire, disposée entre la noix 40 et les axes 84, 94. Les butées 126, 128 permettent de limiter la course de chaque noix 32, 40 à la valeur souhaitée. Dans le présent mode de réalisation, les butées 126, 128 ont la même longueur mesurée selon l'axe D.

Selon un mode de réalisation, lorsque plusieurs dispositifs de calage sont utilisés pour caler un ensemble de charges 10, la plupart des dispositifs de calage peuvent correspondre au dispositif de calage 120. Ceci permet d'obtenir les écartements souhaités entre les charges 10. Une rangée de dispositifs de calage correspondant au dispositif de calage 20 représenté sur les figures 3 à 7 est utilisée de façon à caler de façon homogène toutes les charges 10.

La figure 11 est une vue en perspective d'un autre mode de réalisation d'un dispositif de calage 130. Le dispositif de calage 130 comprend l'ensemble des éléments du dispositif de calage 20 à la différence que les pions de guidage 60, 66, 72, 78 et les rainures 64, 70, 76, 82 ne sont pas présents. Des éléments élastiques, par exemple des cordons élastiques 132 peuvent être prévus autour des mors 48, 54. Ils permettent de rapprocher les mors 48, 54 l'un de l'autre lorsque les noix 32, 40 sont ramenées dans la configuration de fermeture.

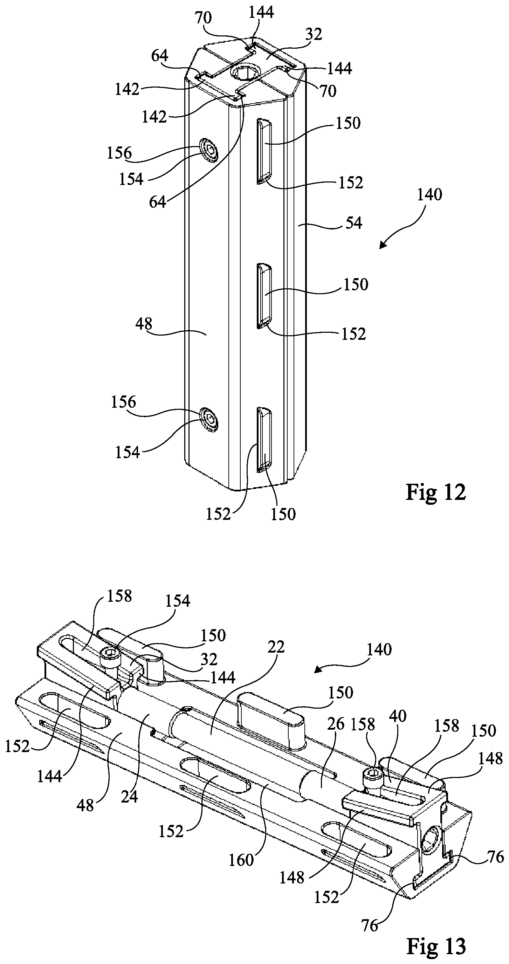

Les figures 12 et 13 sont des vues en perspective d'un autre mode de réalisation d'un dispositif de calage 140, le mors 54 n'étant pas représenté en figure 13. Le dispositif de calage 140 comprend l'ensemble des éléments du dispositif de calage 20 à la différence que les axes 84, 94 et la gorge 28 ne sont pas présents, que le pion de guidage 60 est remplacé par des bords en saillie 142 de la noix 32 qui coopèrent avec les rainures 64 du mors 48, que le pion de guidage 66 est remplacé par des bords en saillie 144 de la noix 32 qui coopèrent avec les rainures 70 du mors 54, que le pion de guidage 72 est remplacé par des bords en saillie, non visibles sur les figures 12 et 13, de la noix 40 qui coopèrent avec les rainures 76 du mors 48 et que le pion de guidage 78 est remplacé par des bords en saillie 148 de la noix 40 qui coopèrent avec les rainures, non visibles sur les figures 12 et 13, du mors 54. En outre, chaque mors 48, 54 comprend des plots 150 en saillie adaptés à pénétrer dans des ouvertures 152 prévues sur l'autre mors 48, 54 lorsque les deux mors 48, 54 sont au contact l'un de l'autre pour jouer le rôle des axes 84, 94. Le dispositif de calage 140 comprend, en outre, des vis 154 vissées dans des ouvertures filetées 156 traversantes prévues dans les mors 48, 54, les extrémités des vis 154 coopérant avec des rainures 158 prévues dans les noix 32, 40. Les vis 154 servent de butées aux déplacements des noix 32, 40.

Dans le présent mode de réalisation, chaque mors 48, 54 comprend un évidement central 160 sur lequel débouchent les rainures 64, 70, 76, 82. Cet évidement central 160 est utilisé lors du montage du dispositif de calage 140, les noix 32, 40 étant montées sur la tige 22 et amenées au contact l'une de l'autre et les mors 48, 54 étant amenés au contact l'un de l'autre, de sorte que les noix 32, 40 se trouvent dans les évidements centraux 160. La tige 22 est ensuite mise en rotation pour faire pénétrer chaque noix 32, 40 dans les rainures 64, 70, 76, 82. Lorsque les noix 32, 40 sont suffisamment éloignées l'une de l'autre, les vis 154 peuvent être mises en place.

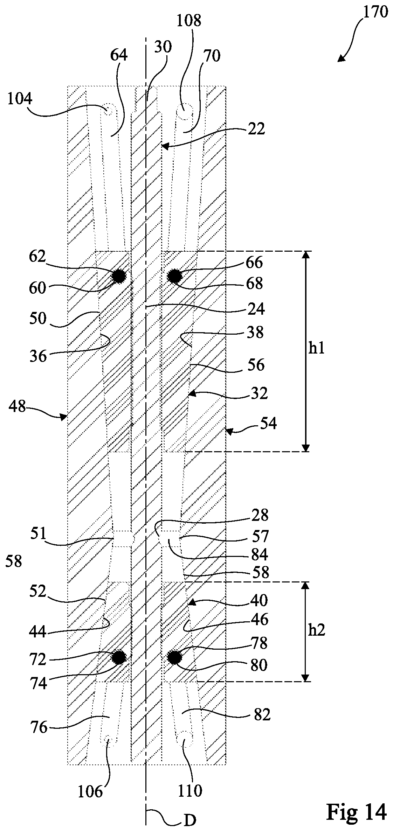

La figure 14 est une vue en coupe d'un autre mode de réalisation d'un dispositif de calage 170. Le dispositif de calage 170 comprend l'ensemble des éléments du dispositif de calage 20 à la différence que la hauteur h1, mesurée selon l'axe D, de la noix 32 n'est pas égale à la hauteur h2, mesurée selon l'axe D, de la noix 40 et que les angles d'inclinaison, en valeur absolue, des flancs 36, 38 de la noix 32 par rapport à l'axe D sont différents des angles d'inclinaison, en valeur absolue, des flancs 36 de la noix 40 par rapport à l'axe D. Le pas des filets à droite de la tige 22 est différent du pas des filets à gauche de la tige 22 pour permettre un déplacement simultanée des noix 32, 40. Plus précisément, le rapport des tangentes des demi-angles au sommet des noix 32, 40 est proportionnel au rapport des pas gauche et droite. Le dispositif de calage 170 permet de répartir de façon asymétrique les contraintes exercées par les mors 48, 54 sur les charges 10.

En outre, dans le présent mode de réalisation, pour chaque paire d'ouvertures cylindriques 104, 106, 108 et 110, l'une des ouvertures a un diamètre inférieur au diamètre de l'autre ouverture. De façon avantageuse, lors du montage du dispositif de calage 170, lorsque le pion de guidage 60, 72, 68, 78 est inséré dans l'ouverture associée 104, 106, 108 et 110 de plus grand diamètre, il ne peut pas s'échapper de l'autre côté du mors 48, 54 par l'ouverture de plus petit diamètre. En outre, lors du démontage du dispositif de calage 170, il est possible de faire sortir le pion de guidage 60, 72, 68, 78 de l'ouverture 104, 106, 108 et 110 de plus grand diamètre, en introduisant un élément poussoir par l'ouverture 104, 106, 108 et 110 de plus petit diamètre.

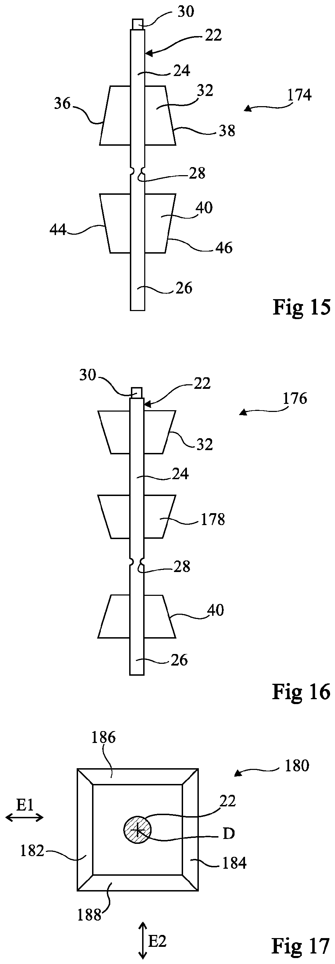

La figure 15 est une vue en coupe de la tige 22 et des noix 32, 40 d'un autre mode de réalisation du dispositif de calage 174. A la différence du dispositif de calage 20 représenté sur les figures 3 à 7, les flancs 36, 38 de la noix s'éloignent l'un de l'autre lorsque l'on s'éloigne de la tête 30 selon l'axe D et les flancs 44, 46 de la noix 40 s'éloignent l'un de l'autre lorsque l'on se rapproche de la tête 30 selon l'axe D. Dans ce mode de réalisation, lorsque la tige 22 est mise en rotation, un éloignement des noix 32, 40 l'une de l'autre entraîne un éloignement des mors l'un de l'autre et un rapprochement des noix 32, 40 l'une de l'autre entraîne un rapprochement des mors 48, 54 l'un de l'autre.

La figure 16 est une vue en coupe de la tige 22 et des noix d'un autre mode de réalisation du dispositif de calage 176. En plus des noix 32, 40, le dispositif de calage comprend une noix supplémentaire 178 vissée sur la portion filetée 24 de la tige 22. De façon plus générale, le nombre de noix vissées sur la tige 22 est choisi en fonction de la répartition souhaitée des efforts devant être exercés par les mors 48, 54 sur les charges 10.

En outre, même si seuls deux mors 48, 54 sont utilisés dans les modes de réalisation décrits précédemment, le nombre de mors peut être supérieur à deux.

La figure 17 est une vue en coupe dans un plan perpendiculaire à l'axe D d'un dispositif de calage 180, seuls les mors et la tige 22 étant représentés. A titre d'exemple, quatre mors 182, 184, 186, 188 peuvent être utilisés formant une première paire de mors 182, 184 opposés et une deuxième paire de mors 186, 188 opposés. En configuration fermée, les faces externes des mors 182, 184, 186, 188 peuvent former un carré en vue de dessus. Lorsque la tige 22 est actionnée, les mors 182, 184 de la première paire se déplacent selon une première direction E1 perpendiculaire à l'axe D en s'éloignant ou se rapprochant l'un de l'autre selon le sens de rotation de la tige 22 et les mors 186, 188 de la deuxième paire se déplacent selon une deuxième direction E2 perpendiculaire à l'axe D et perpendiculaire à la première direction E1 en s'éloignant ou se rapprochant l'un de l'autre selon le sens de rotation de la tige 22.

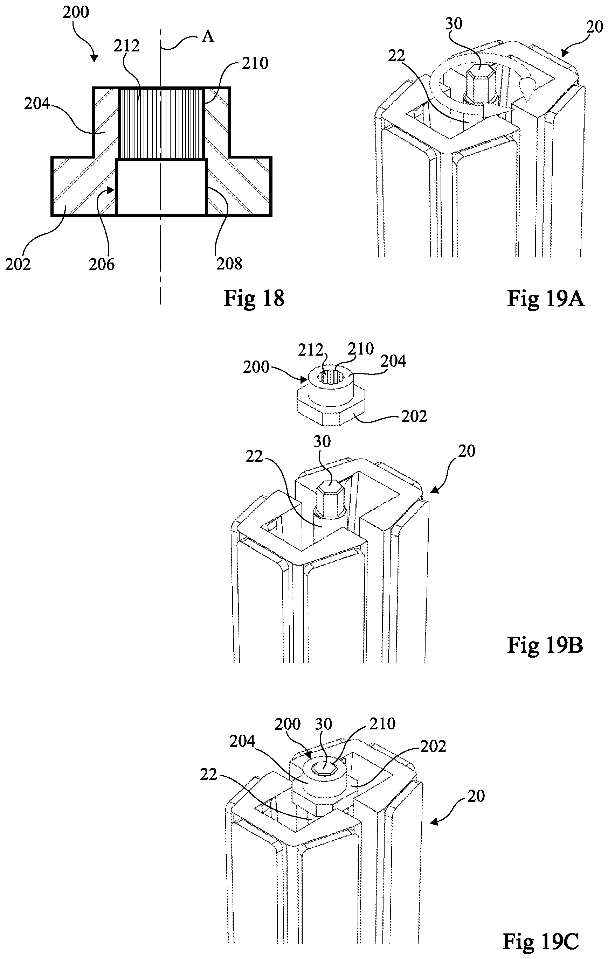

La figure 18 est une vue en coupe schématique d'un mode de réalisation d'un dispositif anti-rotation 200 et les figures 19A à 19C sont des vues en perspective, partielles et schématiques, du dispositif de calage 20 représenté en figure 3 à des étapes successives d'un procédé de blocage du dispositif de calage 20 contre le desserrage mettant en oeuvre le dispositif anti-rotation 200.

Selon un mode de réalisation, le dispositif anti-rotation 200 comprend une base 202 et une tête 204. Comme cela apparaît sur la figure 19B, la tête 204 a en vue de dessus une section circulaire d'axe A. La base 202 a en vue de dessus une section externe carrée à bords chanfreinés dont le centre est sur l'axe A. Le dispositif anti-rotation 200 est traversé de part en part par une ouverture 206 d'axe A comprenant une première portion 208, du côté de la base 202, se prolongeant par une deuxième portion 210 du côté de la tête 204. La portion 208 de l'ouverture 206 a une section circulaire dont le diamètre est légèrement supérieur au diamètre externe de la tige 22. La portion 210 de l'ouverture 206 comprend des dents 212 s'étendant parallèlement à l'axe A.

Un mode de réalisation d'un procédé de blocage du dispositif de calage 20 va maintenant être décrit. Le dispositif de calage 20 est amené à sa position d'utilisation en faisant tourner la tige 22 (figure 19A). Le dispositif anti-rotation 200 est amené en vis-à-vis de la tête 30 (figure 19B). Le dispositif anti-rotation 200 est alors inséré sur la tête 30 (figure 19C) de sorte que la base 202 est située entre les mors 48, 54 et que la tête 30 est située au moins en partie dans la portion 210 de l'ouverture 206. La tête 30 coopère alors avec les dents 212. La base 202 empêche tout mouvement de rotation du dispositif anti-rotation 200 par rapport au dispositif de calage 20 en venant en butée contre les mors 48, 54. Un mouvement de rotation de la tige 22 correspondant à un desserrage est ainsi empêché, le desserrage pouvant être dû à une action d'un opérateur ou pouvant être involontaire, par exemple suite à des vibrations ou aux efforts s'exerçant sur le dispositif de calage 20. En effet, la tige 22 et le dispositif anti-rotation 200 sont solidaires en rotation par la coopération de la tête 30 et des dents 212 et tout mouvement de rotation du dispositif anti-rotation 200 est empêché par la mise en butée de la base 202 contre les mors 48, 54.Divers modes de réalisation avec diverses variantes ont été décrits ci-dessus. On note que l'homme de l'art peut combiner divers éléments de ces divers modes de réalisation et variantes sans faire preuve d'activité inventive. En particulier, l'utilisation de paires d'ouvertures 104, 108, 106, 110 de diamètres différents décrite précédemment pour le dispositif de calage 170 en relation avec la figure 14 peut être mise en oeuvre avec les autres modes de réalisation décrits précédemment, notamment les dispositifs de calage 20, 120, 130, 174, 176 et 180.

## Revendications

1. Dispositif de calage (20) comprenant une tige comprenant une première portion filetée (24) ayant un premier filetage à droite et une deuxième portion filetée (26) ayant un deuxième filetage à gauche, une première noix (32) engrenant avec le premier filetage, une deuxième noix (40) engrenant avec le deuxième filetage, et caractérisé en qu'il comprend également au moins des premier et deuxième mors (48, 54) reliés chacun aux première et deuxième noix selon des liaisons glissière.

2. Dispositif de calage selon la revendication 1, dans lequel le rapport entre la hauteur de chaque premier et deuxième mors (48, 54), mesurée selon l'axe (D) de la tige (22) et la dimension transversale maximale, lorsque les mors sont le plus rapproché l'un de l'autre est compris entre 2 et 10.

3. Dispositif de calage selon la revendication 1 ou 2, dans lequel la tige (22) comprend, à une extrémité, une tête (30) destinée à être actionnée par un outil.

4. Dispositif de calage selon l'une quelconque des revendications 1 à 3, dans lequel la première noix (32) comprend des premier et deuxième flancs (36, 38) opposés inclinés par rapport à l'axe (D) de la tige (22), les angles d'inclinaison des premier et deuxième flancs étant opposés, dans lequel la deuxième noix (40) comprend des troisième et quatrième flancs (44, 46) opposés inclinés par rapport à l'axe de la tige, les angles d'inclinaison des troisième et quatrième flancs étant opposés, dans lequel le premier mors (48) comprend des première et deuxième parois (50, 52), le premier flanc étant adapté à coulisser sur la première paroi et le troisième flanc étant adapté à coulisser sur la deuxième paroi, et dans lequel le deuxième mors (54) comprend des troisième et quatrième parois (56, 58), le deuxième flanc étant adapté à coulisser sur la troisième paroi et le quatrième flanc étant adapté à coulisser sur la quatrième paroi.

5. Dispositif de calage selon la revendication 4, comprenant :
un premier pion (60) relié à la première noix (32), au moins une extrémité du premier pion coulissant dans une première rainure (64) du premier mors (48) et s'étendant parallèlement à la première paroi (50) ;
un deuxième pion (66) relié à la première noix (32), au moins une extrémité du deuxième pion coulissant dans une deuxième rainure (70) du deuxième mors (54) et s'étendant parallèlement à la troisième paroi (56) ;
un troisième pion (72) relié à la deuxième noix (40), au moins une extrémité du troisième pion coulissant dans une troisième rainure (76) du premier mors (48) et s'étendant parallèlement à la deuxième paroi (52) ; et
un quatrième pion (78) relié à la deuxième noix (40), au moins une extrémité du quatrième pion coulissant dans une quatrième rainure (82) du deuxième mors (54) et s'étendant parallèlement à la quatrième paroi (58).

6. Dispositif de calage selon l'une quelconque des revendications 1 à 5, comprenant au moins un axe (84, 94), d'axe perpendiculaire à l'axe (D) de la tige (22), fixé au premier mors (48) ou au deuxième mors (54), la tige comprenant une gorge (28) entre la première portion filetée (24) et la deuxième portion filetée (26), l'axe étant tangent à la tige dans la gorge.

7. Dispositif de calage selon l'une quelconque des revendications 1 à 6, comprenant au moins une butée (126, 128) entre les première et deuxième noix (32, 40).

8. Dispositif de calage selon l'une quelconque des revendications 1 à 7, comprenant un élément élastique (132) entourant les premier et deuxième mors (48, 54).

9. Dispositif de calage selon l'une quelconque des revendications 1 à 8, dans lequel les première et deuxième noix (32, 40) sont identiques.

10. Dispositif de calage selon l'une quelconque des revendications 1 à 9, dans lequel le pas du premier filetage à droite est différent du pas du deuxième filetage à gauche.

11. Procédé de calage de charges (10) comprenant les étapes suivantes :
disposer des dispositifs de calage (20) selon l'une quelconque des revendications 1 à 10 entre des charges (10) d'une première couche (16) de charges ;
actionner les dispositifs de calage pour caler les charges ; et
former une deuxième couche de charges sur la première couche.

## Patentansprüche

1. Klemmvorrichtung (20) mit einer Stange, die einen ersten Gewindeabschnitt (24) mit einem ersten Rechtsgewinde und einen zweiten Gewindeabschnitt (26) mit einem zweiten Linksgewinde aufweist, einer ersten Mutter (32), die mit dem ersten Gewinde in Eingriff steht, einer zweiten Mutter (40), die mit dem zweiten Gewinde in Eingriff steht, und **dadurch gekennzeichnet, dass** sie außerdem mindestens eine erste und eine zweite Backe (48, 54) aufweist, die jeweils in Gleitverbindung mit der ersten und der zweiten Mutter stehen.

2. Klemmvorrichtung nach Anspruch 1, wobei das Verhältnis der Höhe jeder ersten und zweiten Backe (48, 54), gemessen entlang der Achse (D) der Stange (22), zur maximalen Querabmessung, wenn die Backen einander am nächsten sind, im Bereich von 2 bis 10 liegt.

3. Klemmvorrichtung nach Anspruch 1 oder 2, bei der die Stange (22) an einem Ende einen Kopf (30) aufweist, der dazu bestimmt ist, durch ein Werkzeug betätigt zu werden.

4. Klemmvorrichtung nach einem der Ansprüche 1 bis 3, wobei die erste Mutter (32) erste und zweite gegenüberliegende Seiten (36, 38) aufweist, die in Bezug auf die Achse (D) der Stange (22) geneigt sind, wobei die Neigungswinkel der ersten und zweiten Seiten entgegengesetzt sind, wobei die zweite Mutter (40) dritte und vierte gegenüberliegende Seiten (44, 46) aufweist, die in Bezug auf die Achse der Stange geneigt sind, wobei die Neigungswinkel der dritten und vierten Seiten entgegengesetzt sind, wobei die erste Backe (48) eine erste und eine zweite Wand (50, 52) aufweist, wobei die erste Seite auf der ersten Wand gleiten kann und die dritte Seite auf der zweiten Wand gleiten kann, und wobei die zweite Backe (54) eine dritte und eine vierte Wand (56, 58) aufweist, wobei die zweite Seite auf der dritten Wand gleiten kann und die vierte Seite auf der vierten Wand gleiten kann.

5. Klemmvorrichtung nach Anspruch 4, die Folgendes aufweist:
einen ersten Stift (60), der mit der ersten Mutter (32) gekoppelt ist, wobei mindestens ein Ende des ersten Stifts in einer ersten Nut (64) der ersten Backe (48) gleitet und sich parallel zur ersten Wand (50) erstreckt;
einen zweiten Stift (66), der mit der ersten Mutter (32) gekoppelt ist, wobei mindestens ein Ende des zweiten Stifts in einer zweiten Nut (70) der zweiten Backe (54) gleitet und sich parallel zu der dritten Wand (56) erstreckt;
einen dritten Stift (72), der mit der zweiten Mutter (40) gekoppelt ist, wobei mindestens ein Ende des dritten Stifts in einer dritten Nut (76) der ersten Backe (48) gleitet und sich parallel zu der zweiten Wand (52) erstreckt; und
einen vierten Stift (78), der mit der zweiten Mutter (40) gekoppelt ist, wobei mindestens ein Ende des vierten Stiftes in einer vierten Nut (82) der zweiten Backe (54) gleitet und sich parallel zur vierten Wand (58) erstreckt.

6. Klemmvorrichtung nach einem der Ansprüche 1 bis 5, mit mindestens einer Spindel (84, 94), deren Achse senkrecht zur Achse (D) der Stange (22) verläuft und die an der ersten Backe (48) oder an der zweiten Backe (54) befestigt ist, wobei die Stange zwischen dem ersten Gewindeabschnitt (24) und dem zweiten Gewindeabschnitt (26) eine Aussparung oder Nut (28) aufweist und die Spindel die Stange in der Aussparung oder Nut berührt.

7. Klemmvorrichtung nach einem der Ansprüche 1 bis 6, die mindestens einen Anschlag (126, 128) zwischen der ersten und der zweiten Mutter (32, 40) aufweist.

8. Klemmvorrichtung nach einem der Ansprüche 1 bis 7, die ein elastisches Element (132) aufweist, das die erste und zweite Backe (48, 54) umgibt.

9. Klemmvorrichtung nach einem der Ansprüche 1 bis 8, wobei die erste und die zweite Mutter (32, 40) identisch sind.

10. Klemmvorrichtung nach einem der Ansprüche 1 bis 9, wobei die Steigung des ersten Rechtsgewindes sich von der Steigung des zweiten Linksgewindes unterscheidet.

11. Ein Verfahren zum Verspannen von Lasten (10), das die folgenden Schritte aufweist:
Anordnen von Klemmvorrichtungen (20) nach einem der Ansprüche 1 bis 10 zwischen Lasten (10) einer ersten Schicht (16) von Lasten;
Betätigen der Klemmvorrichtungen zur Sicherung der Lasten; und
Bilden einer zweiten Schicht von Lasten auf der ersten Schicht.

## Claims

1. A bracing device (20) comprising a rod comprising a first threaded portion (24) having a first right-hand thread and a second threaded portion (26) having a second left-hand thread, a first nut (32) meshing with the first thread, a second nut (40) meshing with the second thread, and **characterized in that** it also comprises at least first and second jaws (48, 54) each in slide joint connection with the first and second nuts.

2. The bracing device of claim 1, wherein the ratio of the height of each first and second jaw (48, 54) measured along the axis (D) of the rod (22), to the maximum transverse dimension, when the jaws are the closest to each other, is in the range from 2 to 10.

3. The bracing device of claim 1 or 2, wherein the rod (22) comprises, at one end, a head (30) intended to be actuated by a tool.

4. The bracing device of any of claims 1 to 3, wherein the first nut (32) comprises first and second opposite sides (36, 38) inclined with respect to the axis (D) of the rod (22), the inclination angles of the first and second sides being opposite, wherein the second nut (40) comprises third and fourth opposite sides (44, 46) inclined with respect to the axis of the rod, the inclination angles of the third and fourth sides being opposite, wherein the first jaw (48) comprises first and second walls (50, 52), the first side being capable of sliding on the first wall and the third side being capable of sliding on the second wall, and wherein the second jaw (54) comprises third and fourth walls (56, 58), the second side being capable of sliding on the third wall and the fourth side being capable of sliding on the fourth wall.

5. The bracing device of claim 4, comprising:
a first pin (60) coupled to the first nut (32), at least one end of the first pin sliding in a first groove (64) of the first jaw (48) and extending parallel to the first wall (50);
a second pin (66) coupled to the first nut (32), at least one end of the second pin sliding in a second groove (70) of the second jaw (54) and extending parallel to the third wall (56) ;
a third pin (72) coupled to the second nut (40), at least one end of the third pin sliding in a third groove (76) of the first jaw (48) and extending parallel to the second wall (52) ; and
a fourth pin (78) coupled to the second nut (40), at least one end of the fourth pin sliding in a fourth groove (82) of the second jaw (54) and extending parallel to the fourth wall (58) .

6. The bracing device of any of claims 1 to 5, comprising at least one pin (84, 94), having an axis perpendicular to the axis (D) of the rod (22), affixed to the first jaw (48) or to the second jaw (54), the rod comprising a recess (28) between the first threaded portion (24) and the second threaded portion (26), the pin being tangent to the rod in the recess.

7. The bracing device of any of claims 1 to 6, comprising at least one stop (126, 128) between the first and second nuts (32, 40).

8. The bracing device of any of claims 1 to 7, comprising a resilient element (132) surrounding the first and second jaws (48, 54).

9. The bracing device of any of claims 1 to 8, wherein the first and second nuts (32, 40) are identical.

10. The bracing device of any of claims 1 to 9, wherein the pitch of the first right-hand thread is different from the pitch of the second left-hand thread.

11. A method of bracing loads (10) comprising the steps of:
arranging bracing devices (20) of any of claims 1 to 10 between loads (10) of a first layer (16) of loads;
actuating the bracing devices to secure the loads; and
forming a second layer of loads on the first layer.
